# EUROPEAN PATENT SPECIFICATION

(11) **EP 1 604 715 B1**
(45) Date of publication and mention of the grant of the patent: **23.05.2007**
(21) Application number: 04105786.0
(22) Date of filing: 15.11.2004
(51) Int. Cl.: B01D 29/11, D21D 5/16

(54) **Method of making filtering baskets for filtering fibers in aqueous suspension and filtering basket made by this method**
Stabsiebkorb zur Filtrierung von Fasersuspensionen und Verfahren zu dessen Herstellung
Tamis cylindrique pour la filtration d'une suspension de fibre et son procédé de fabrication

(30) Priority: 10.06.2004 IT VI20040139
(43) Date of publication of application: 14.12.2005
(73) Proprietor: Comer SpA, 36030 S. Vito di Leguzzano (VI) (IT)
(72) Inventor: Dal Maso, Giancarlo, 36015, Schio (VI) (IT); Magaraggia, Flavio, 36100, Vicenza (IT)
(74) Representative: Bonini, Ercole

(56) References cited:
- WO-A-03/102297
- GB-A- 784 995
- US-A- 4 828 689

## Description

The invention is about a method for manufacturing filtering baskets for filtering machines of fibres in aqueous suspension.

The invention is about as well a filtering basket obtained according to the teachings of said method.

It is known that, in paper manufacture, the aqueous suspensions containing cellulose fibres have to be properly filtered to separate any present impurities therefrom before being used in the productive process.

The filtering is performed through mechanical refiners, inside which the aqueous suspension is separated from the impurities and the pollutant substances contained therein to be sent to the subsequent processing.

All the mechanical refiners belonging to the prior art, although in their different specific embodiments, substantially consist of a fixed filtering basket having its side surface provided with calibrated openings, in which a rotor is internally disposed, with the function of maintaining the suspension mixed enough to avoid the stoppage of the calibrated openings caused by the unfiltered material.

The fixed filtering basket has its side surface consisting of a plate provided with a plurality of holes or, alternatively, with a plurality of notches generally disposed according to the longitudinal axis of said basket.

According to other more modern known embodiments, the baskets consist of a plurality of mainly longitudinal developed metal bars, having a substantially trapezoidal cross sectional shape and disposed according to a cylindrical surface.

In particular, the bars are mutually parallel disposed side by side and they are supported by a plurality of mutually coaxial and spaced annular elements, to which they are fixed at the inner circumference.

The filtering surface thus defined consists of the plurality of slots formed by the mutually adjacent bars.

In such a way, filtering baskets of greater efficiency are obtained because they have a greater useful filtering surface, being equal the overall side surface, with respect to the embodiments of known type.

The bars and the annular elements are generally made of stainless steel and the bars are mutually disposed side by side, in proper seats obtained in the annular elements supporting them.

The fixing of the bars to the annular elements is performed by welding or, according to other embodiments, by direct clinching or by the interposition of support elements.

In further embodiments, the rings can be made of carbon fibre and the bars are fixed to the seats through adhesive substances.

Filtering baskets having the aforementioned characteristics are disclosed in the documents WO 03/091496, US 6,131,743 and WO 03/102297.

However, the cited known filtering baskets have some acknowledged inconveniences.

A first inconvenience is due to the constructional complexity coming from the need to arrange, on each support annular element, the proper seats for housing the bars and subsequently for performing their fixing by welding, adhesive substances or clinching.

Another inconvenience is due to the difficulty to maintain constant, with reduced tolerance, the distance between adjacent bars, both during manufacture and when the manufacture is completed, in order to maintain constant the width of the slots for the entire basket length.

The achievable tolerance is defined by the sum of the manufacturing tolerances of the seats in the support annular elements, the deformations due to the clinching or the welding of the shaped bars and the shape constancy of said bars.

In particular recent embodiments, where the size of the slots is close to the size of the fibres to be treated, this tolerance becomes extremely important for a good efficiency of the filtering process.

A further inconvenience is due to the fact that vibrations occur during operation, frequently causing breakings due to fatigue.

In fact, such breakings occur in the clinching or welding points of the bars to the support annular elements, where the concentration of tensions is a starting point of possible fatigue breakings.

Another inconvenience is due to the fact that the number of bars, and consequently of filtering slots, which can be provided in the cited known baskets is limited by the minimum thickness that each bar must have to be welded, glued or clinched in the seat obtained on the annular elements, which evidently cannot have a high density not to compromise the mechanical resistance of the annular element.

The present invention intends to overcome the aforementioned inconveniences.

It is a first object of the invention to provide for a filtering basket for filtering machines of fibres in aqueous suspension which simplifies the known constructional technique, reducing the number of machining operations, the number of components and consequently the productive costs.

It is another object of the invention to provide for a filtering basket in which it is possible to obtain a greater filtering surface with respect to the cited prior art.

It is a further object of the invention to provide for a filtering basket which is more fatigue-resistant and consequently of higher durability with respect to the cited known baskets.

Said objects are obtained by providing for a method for manufacturing filtering baskets for filtering machines of fibres in aqueous suspension the main steps of said method being in accordance with claim 1.

The filtering basket, being too object of the invention, carried out according to the method hereby described and the main features of which are according to claim 3.

Preferably, according to the invention, the longitudinal axis of the basket is parallel to the directions defined by the shaped bars, so that the basket takes a tubular cylindrical shape in which the shaped bars form the side surface and the longitudinal directions defined by the shaped bars form as many generatrixes therein.

Advantageously, the use of shaped bars disposed side by side and encircled by means of the annular elements simplifies the constructional technique of the baskets and reduces their productive costs.

In fact, the machining operations of discs engraving, of any bars treatment and of fixing by welding, gluing or other are avoided.

More advantageously, the use of shaped bars disposed side by side allows to increase the filtering surface, being equal the side surface of the basket, with a consequent higher efficiency of the aqueous suspension filtering process.

Still advantageously, being the bars mutually coupled in an integral way, the tolerance which can be obtained at the slots is exclusively connected to possible imperfections of the shaped bars profile.

The aforesaid objects and advantages will be better highlighted in the description of preferred embodiments of the invention, given in an explanatory but not limiting way, with reference to the figures of the annexed drawings, wherein:
- Figure 1 is an axonometric view of the filtering basket of the invention;
- Figure 2 shows a detail of the filtering basket of Figure 1;
- Figures 3 and 4 show the different assembling stages of the basket of Figure 1;

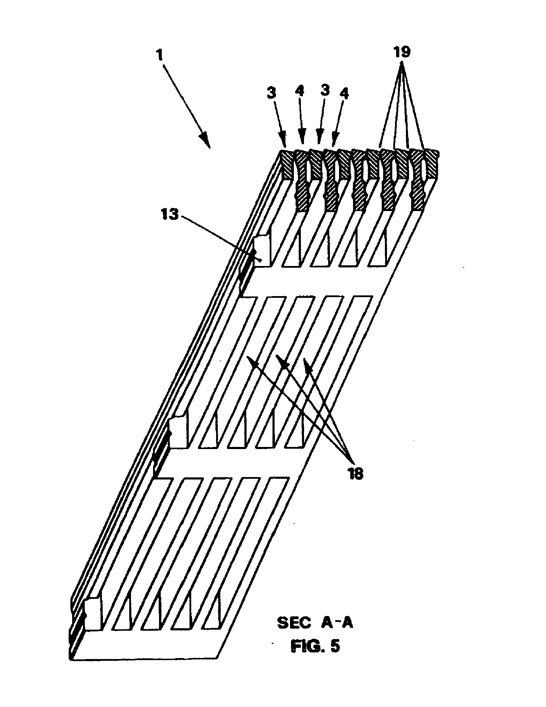

- Figure 5 is a sectional view of the detail shown in Figure 4;

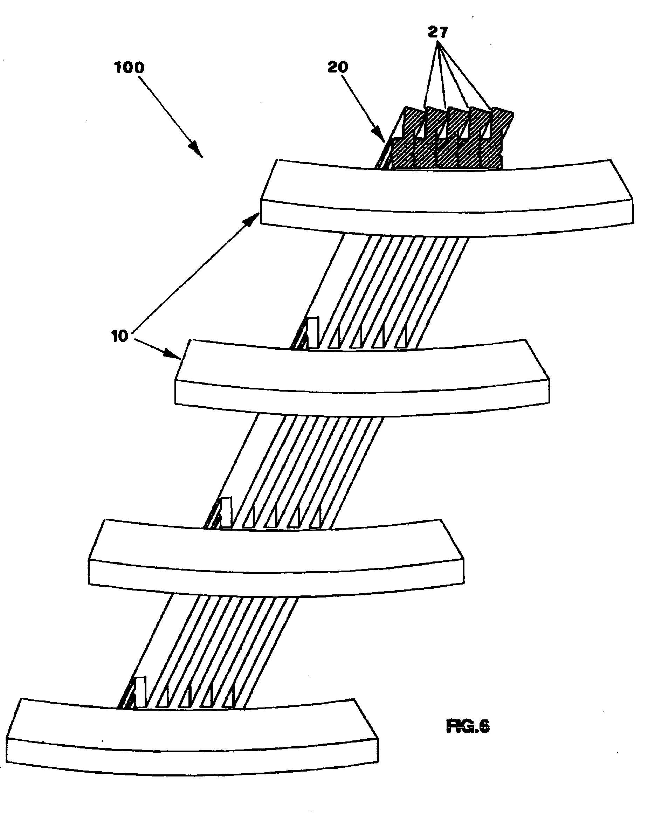

- Figure 6 shows another executive embodiment of the basket of Figure 1;
- Figures 7 and 8 show the different assembling stages of the basket of Figure 6; and

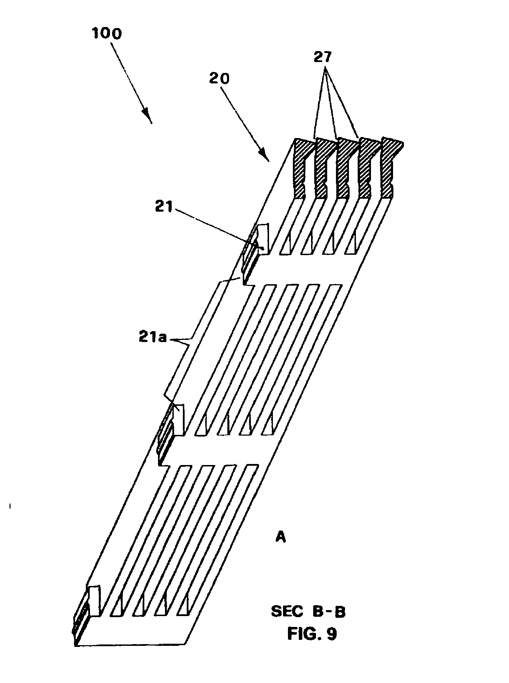

- Figure 9 is a sectional view of the detail shown in Figure 8.

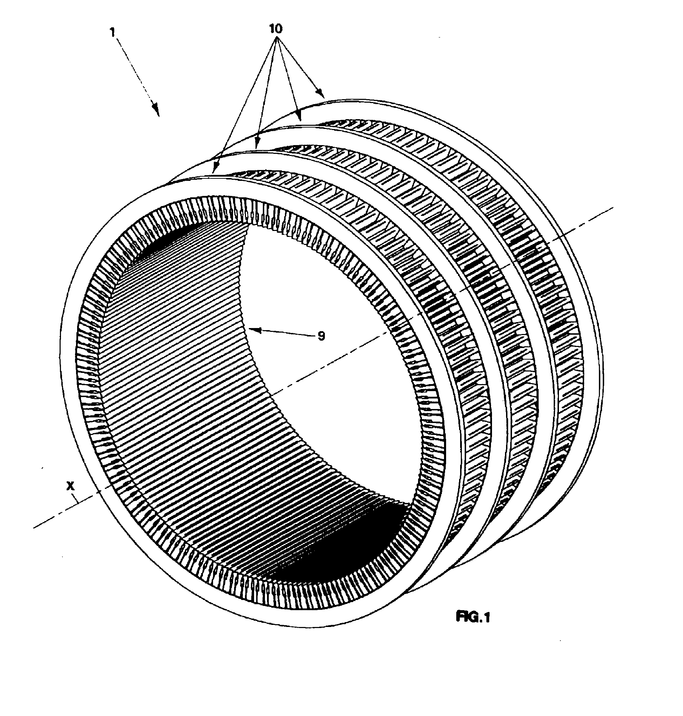

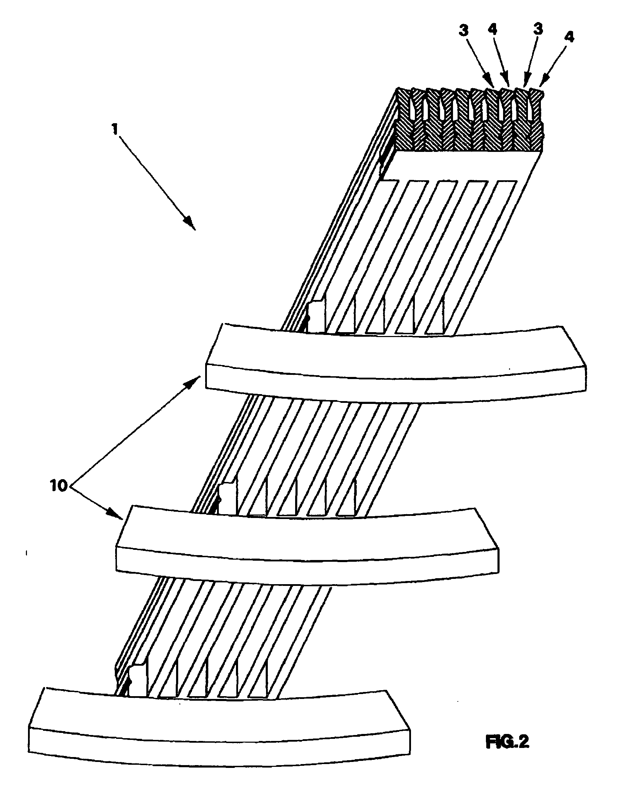

The filtering basket of the invention is shown in Figures 1 and 2, where it is generally indicated with numeral **1**.

It is applied to machines for filtering fibres in aqueous suspension and, according to the invention, it comprises a plurality of mainly longitudinally developed shaped bars **3**, **4** disposed side by side one close to another.

The shaped bars **3**, **4** have the contact surfaces **5**, **6**, **7**, **8** with the adjacent shaped bars **3**, **4** belonging to mutually convergent planes to define, once disposed side by side, a tubular structure **9** having a central longitudinal axis **X** substantially parallel to the longitudinal directions defined by the shaped bars **3, 4.**

The filtering basket **1** further comprises two or more mutually coaxial and mutually spaced according to the longitudinal axis **X** annular elements **10,** externally coupled with the shaped bars **3, 4.**

The annular elements **10** are coupled with radial interference to provide for encircling the shaped bars **3, 4** and to stably constrain the tubular structure **9** defined therefrom.

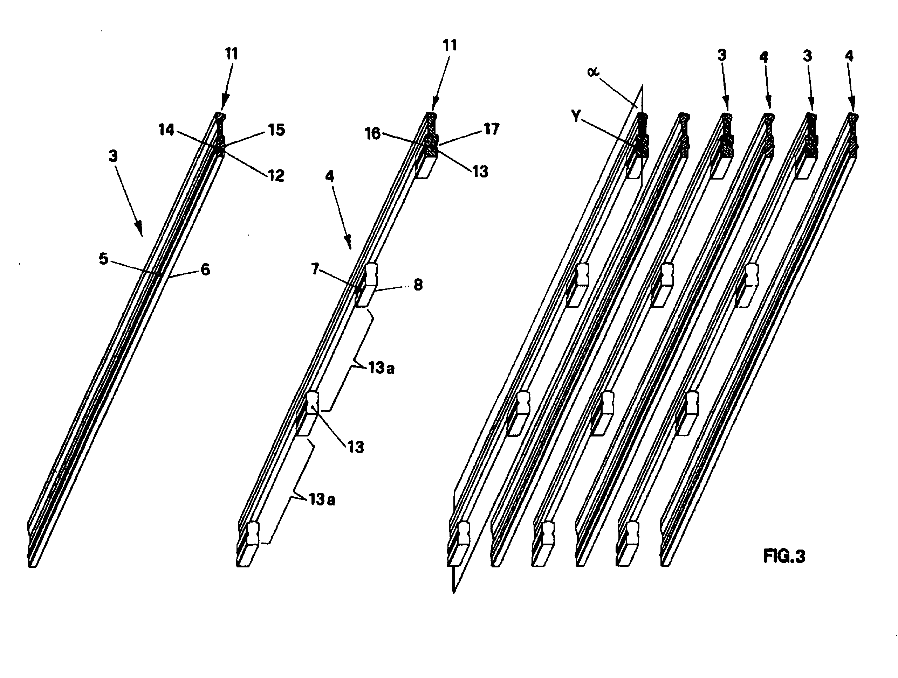

As one can see in Figure 3, the shaped bars **3, 4** comprise a substantially trapezoidal shaped head **11,** with the longer base **11a** turned toward the interior of the basket **1** and a substantially parallelepipedal shaped body **12, 13** of reciprocal bearing.

The coupling of the bearing surfaces **5, 6, 7, 8** of each shaped bar **3, 4** with the adjacent ones is made stable by the presence of mutually joinable concavities **16, 17** and insertion protuberances **14, 15,** provided on the body **12, 13** of each shaped bar **3, 4.**

The embodiment of Figure 3 comprises a first **3** and a second **4** series of shaped bars, which are alternately disposed side by side to provide for the tubular structure **9.**

In particular, all the shaped bars **3** comprise a continuous body **12,** of substantially symmetrical shape with respect to the longitudinal plane **α** passing through the longitudinal axis **Y** defined by the shaped bar **3,** on which protuberances **14, 15** for the insertion in corresponding concavities **16, 17** made on the body **13** of the shaped bars **4** are obtained, said body **13** being of symmetrical shape too but having missing portions **13a.**

The missing portions **13a** are such to define C-shaped recesses disposed along the longitudinal axis **Y**, with constant pitch, on the body **13** of the shaped bars **4.**

In such a way, when the shaped bars **3, 4** are mutually disposed side by side, the presence of missing portions **13a** on the body **13** of the shaped bars **4** defines a drainage chamber **18** from which the filtered suspension exits.

According to this embodiment, the width of the body **12, 13** is greater than the width of the longer base **11 a** of the head **11,** which is disposed centred with respect to the longitudinal plane **α** to define a plurality of slots **19** able to provide for the filtering surface of the basket **1.**

The executive embodiment **100,** shown in Figures from 6 to 9, differs from the previously described one in that the all shaped bars **20** are equal and they all have portions **21a** recessed in the body **21** at the side surface turned toward the adjacent shaped bar **20.**

The body **21** of each shaped bar **20** is provided with concavities **23** on one contact surface **25** and with insertion protuberances **22** on the other contact surface **24,** joinable one to another, able to allow the coupling to define the tubular structure.

The head **26** of the shaped bar **20,** of substantially trapezoidal shape, is disposed in an eccentric position with respect to the longitudinal symmetry plane **β** of the bar **20,** where the width of the longer base **26a** is lower than the width of the body **21,** to define a plurality of slots **27** which provide for the filtering surface of the basket **100** when the shaped bars **20** are disposed side by side.

In both the described embodiments **1, 100** the missing portions **13a** and the recessed portions **21a** are comprised between two adjacent annular elements **10.**

In order to provide for filtering baskets having different diameters, some shaped bars have contact surfaces belonging to mutually convergent planes, with an angle being a function of the basket final diameter.

Concerning the heads **11, 26** of the shaped bars **3, 4, 20,** they all have the same shape and size in all the described and shown executive embodiments **1, 100.**

In the filtering basket of the invention, according to the teachings of the international published application WO 03/102297, filed by the same applicant of the present invention, the heads of the shaped bars could be disposed at not constant radial distances with respect to the longitudinal axis of the tubular structure.

In particular, the shaped bars comprise first shaped bars and second shaped bars, where the heads of the first shaped bars and the second shaped bars are disposed according to circumferences coaxial with the tubular structure longitudinal axis and they have different radiuses.

The heads of the first and second shaped bars are disposed according to a first and a second circumference, where the first circumference has a lower radius with respect to the second circumference radius.

The surface turned toward the interior of the basket of each of the first shaped bars head is orthogonally disposed with respect to the first circumference radius, while the surface turned toward the interior of the basket of each of the second shaped bars head is inclined with respect to the second circumference radius.

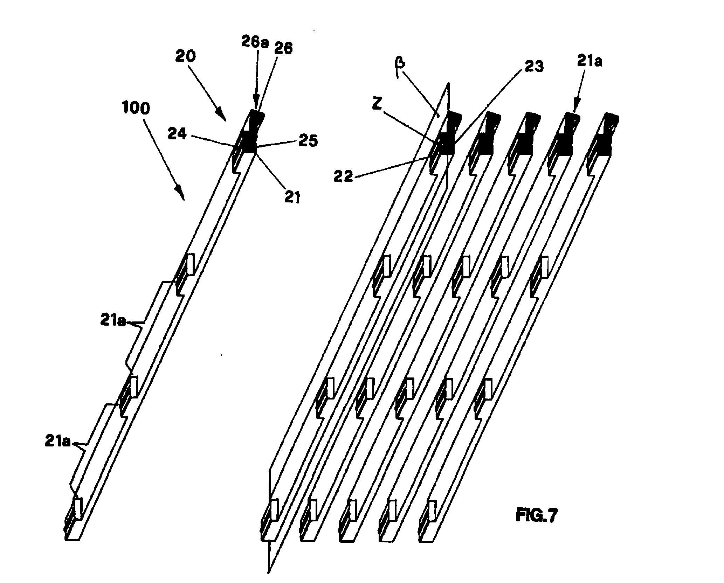

Operatively, to proceed for coupling and manufacturing the filtering basket **1, 100,** the shaped bars **3, 4, 20** have to be disposed side by side, as shown in Figures 3 and 7.

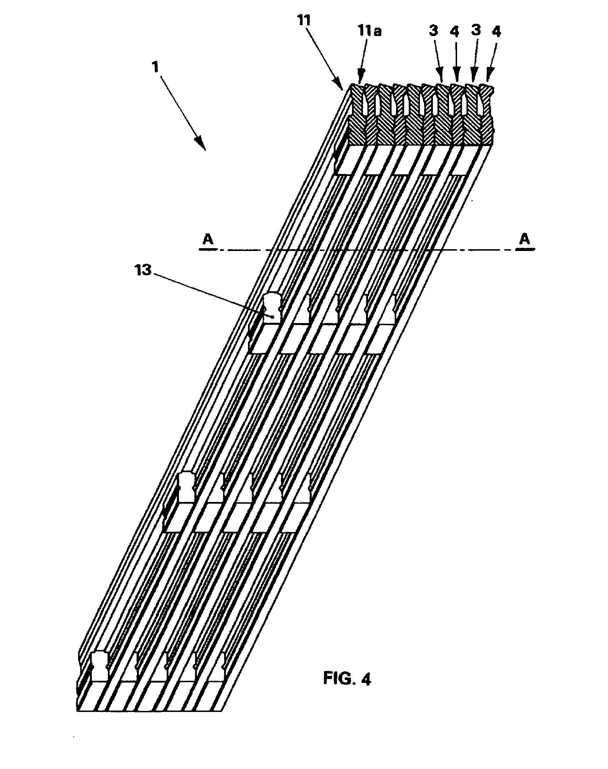

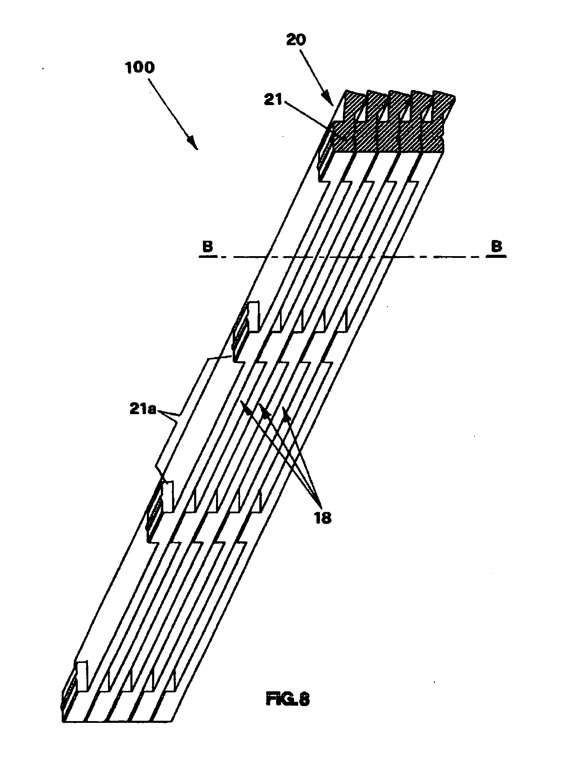

The shaped bars **3, 4, 20** are disposed side by side with the contact surfaces **5, 6, 24, 25,** so that the joined profiles **14, 15, 16, 17, 22, 23** consisting of the concavities **16, 17, 23** and the insertion protuberances **14, 15, 22** present on the bodies **12, 13, 21** are coupled, as shown in Figures 4 and 8, to form the tubular structure **9.**

At this point, the annular elements **10** are externally coupled, with radial interference, with the tubular structure **9** to obtain the encircling of the shaped bars **3, 4, 20** and to give stability and stiffness to the filtering basket **1, 100.**

On the basis of the aforesaid description, it should be understood that the filtering basket **1, 100** of the invention, in all the described embodiments, achieves all the intended objects.

In particular, it is achieved the object to provide for a filtering basket for filtering machines of fibres in aqueous suspension which simplifies the known constructional technique and reduces its productive costs.

In fact, the machining operations of discs engraving, of any bars treatment and of fixing by welding, gluing or other are avoided.

It is achieved the object to provide for a filtering basket in which it is possible to obtain a greater filtering surface with respect to the cited prior art, being equal the side surface of the basket, with a consequent higher efficiency of the aqueous suspension filtering process.

It is achieved the object to provide for a filtering basket which is more fatigue-resistant and consequently of higher durability with respect to the cited known baskets.

It is finally achieved the object to obtain a reduced size tolerance of the filtering basket slots.

Modifications and variations to the filtering basket of the invention, not described and not shown in the drawings, could be introduced in the executive stage.

All the described and any other not cited embodiments, if they fall within the scope of protection of the following claims, should be intended as protected by the present patent.

## Claims

1. A method for manufacturing filtering baskets (1, 100) for filtering machines of fibres in aqueous suspension, **characterized in that** it comprises the following; steps:
- preparing a plurality of mainly longitudinal developed shaped bars (3. 4, 20);
- disposing said shaped bars (3, 4, 20) side by side one close to another, at least some of said shaped bars (3, 4, 20) having the contact surfaces (5, 6, 7, 8, 24, 25) formed in such a way that filtering slots (19) are formed between said shaped bars, said contact surfaces of said shaped bars belonging to mutually convergent planes to define a tubular structure (9) having a central longitudinal axis (X):
- externally encircling said shaped bars (3, 4, 20) by means of two or more annular elements (10) able to carry out a radial interference to mutually stably constrain said shaped bars.

2. The method according to claim 1) **charactecized in that** said shaped bars (3, 4, 20) form longitudinal directions, parallel one to another and to said central longitudinal axis (X).

3. A filtering basket (1, 100) for filtering machines of fibres in aqueous suspension, **characterized by** comprising:
- a plurality of mainly longitudinal developed shaped bars (3, 4, 20) disposed side by side one close to another, at least some of said shaped bars (3, 4, 20) having the contact surfaces (5, 6, 7, 8, 24, 25) formed in such a way that filtering slots (19) are formed between said shaped bars, said contact surfaces of said shaped bars belonging to mutually convergent planes to define a tubular structure (9) having a central longitudinal axis (X);
- two or more mutually coaxial annular elements (10), mutually spaced according to said longitudinal axis (X), externally coupled with said shaped bars (3, 4, 20) with radial interference to provide for the encircling of said shaped bars (3, 4, 20).

4. The filtering basket (1, 100) according to claim 3) **characterized in that** said mutually convergent planes, to which said contact surfaces (5, 6, 7, 8, 24, 25) belong, converge in said central longitudinal axis (X).

5. The filtering basket (1, 100) according to any of the claims 3) or 4) **characterized in that** said contact surfaces (5, 6, 7, 8, 24, 25) of said shaped bars (3, 4, 20) comprise mutually joinable concavities (16, 17, 23) and insertion protuberances (14, 15, 22) able to mutually stably constrain said shaped bars (3, 4, 20) when they are encircled by means of said annular elements (10).

6. The filtering basket (1, 100) according to any of the claims 1) or 2) **characterized in that** the cross sectional profile of each of said shaped bars (3, 4 20) comprises a substantially trapezoidal shaped head (11, 26), with the longer base (11a, 26a) turned toward the interior of said basket (1, 100) and a substantially parallelepipedal shaped body (12, 13, 21) of reciprocal bearing.

7. The filtering basket (1, 100) according to claim 6) **characterized in that** the width of said body (12, 13, 21) is greater than the width of said longer base (11a, 26a) of said head (11, 26), to define a plurality of slots (19, 27) between said bars able to provide for the filtering surface of said basket (1, 100).

8. The filtering basket (1, 100) according to claim 6) **characterized in that** said body (13, 21) has a substantially symmetrical shape with respect to a longitudinal plane (α, β) passing through the longitudinal axis (Y, Z) defined by said shaped bar (3, 4, 20).

9. The filtering basket (1) according to claim 8) **characterized in that** said head is centred with respect to said longitudinal plane (α).

10. The filtering basket (100) according to claim 8) **characterized in that** said head is eccentric with respect to said longitudinal plane (β).

11. The filtering basket (1) according to claim 6) **characterized in that** said shaped bars (3, 4) comprise a first series of shaped bars (3), with constant section along the longitudinal axis thereby defined, and a second series of shaped bars (4), each of them having missing portions (13a) in the body (13) able to define C-shaped recesses, each bar (3) of said first series being disposed side by side with a bar (4) belonging to said second series.

12. The filtering basket (1) according to claim 11) **characterized in that** said C-shaped recesses (13a) are disposed along the longitudinal axis (Y) of said shaped bars (4); with constant pitch.

13. The filtering basket (1) according to claim 11) **characterized in that** said missing portions (13a) are comprised between two of said adjacent annular elements (10).

14. The filtering basket (100) according to claim 6) **characterized in that** said body (21) of said shaped bar (20) has recessed portions (21a) at a side surface turned toward the adjacent shaped bar (20).

15. The filtering basket (100) according to claim 14) **characterized in that** said recessed portions (21a) are comprised between two of said adjacent annular elements (10).

16. The filtering basket (1, 100) according to claim 6) **characterized in that** said heads of said shaped bars are disposed at not constant radial distances with respect to said longitudinal axis of said tubular structure, said shaped bars comprising first shaped bars and second shaped bars where the heads of said first shaped bars and said second shaped bars are disposed according to circumferences coaxial with said tubular structure longitudinal axis and they have different radiuses.

17. The filtering basket (1, 100) according to claim 16) **characterized in that** said heads of said first shaped bars are all disposed according to a first circumference and said heads of said second shaped bars are all disposed according to a second circumference, said first circumference having a lower radius with respect to said second circumference radius.

18. The filtering basket (1, 100) according to claim 17) **characterized in that** said head of each of said first shaped bars has the surface turned toward the interior of said basket which is orthogonally disposed with respect to the first circumference radius, and said head of each of said second shaped bars has the surface turned toward the interior of said basket which is inclined with respect to said second circumference radius.

## Patentansprüche

1. Eine Methode zur Herstellung von Filterkörben (1, 100) für Maschinen zur Filterung von Fasern in wässriger Suspension, **dadurch gekennzeichnet, dass** sie folgende Schritte umfasst:
- Vorbereitung einer Vielzahl von im Wesentlichen längs verlaufenden, geformten Stangen (3, 4, 20);
- Anordnung dieser geformten Stangen (3, 4, 20) Seite an Seite eng aneinander, wobei bei wenigstens einigen dieser geformten Stangen (3, 4, 20) die Kontaktflächen (5, 6, 7, 8, 24, 25) so geformt sind, dass zwischen den geformten Stangen Filterschlitze (19) gebildet werden und wobei diese Kontaktflächen der geformten Stangen zu wechselseitig konvergierenden Ebenen gehören, die eine röhrenförmige Struktur (9) mit einer mittleren Längsachse (X) definieren;
- externes Umfassen der geformten Stangen (3, 4, 20) durch zwei oder mehr ringförmige Elemente (10), die in der Lage sind, eine radiale Überlagerung herzustellen, um diese geformten Stangen wechselseitig stabil zu fixieren.

2. Die Methode gemäß Patentanspruch 1), **dadurch gekennzeichnet, dass** die geformten Stangen (3, 4, 20) parallel zueinander und zur mittleren Längsachse (X) verlaufende Längsrichtungen bilden.

3. Ein Filterkorb (1, 100) für Maschinen zur Filterung von Fasern in wässriger Suspension, **dadurch gekennzeichnet, dass** er Folgendes umfasst:
- eine Vielzahl von im Wesentlichen längs verlaufenden, geformten Stangen (3, 4, 20), die Seite an Seite eng aneinander angeordnet sind, von denen wenigstens einige dieser geformten Stangen (3, 4, 20) derart geformte Kontaktflächen (5, 6, 7, 8, 24, 25) aufweisen, dass Filterschlitze (19) zwischen den geformten Stangen gebildet werden, wobei diese Kontaktflächen der geformten Stangen zu wechselseitig konvergierenden Ebenen gehören, die eine röhrenförmige Struktur (9) mit einer mittleren Längsachse (X) definieren;
- zwei oder mehrere, koaxiale, ringförmige Elemente (10), die entsprechend der Längsachse (X) voneinander entfernt sind und von außen mit den geformten Stangen (3, 4, 20) mit radialer Überlagerung verbunden sind, um das Umfassen der geformten Stangen (3, 4, 20) zu bewirken.

4. Der Filterkorb (1, 100) gemäß Patentanspruch 3), **dadurch gekennzeichnet, dass** die wechselseitig konvergierenden Ebenen, zu denen die Kontaktflächen (5, 6, 7, 8, 24, 25) gehören, in die mittlere Längsachse (X) konvergieren;

5. Der Filterkorb (1, 100) gemäß eines jeden der Patentansprüche 3) oder 4), **dadurch gekennzeichnet, dass** die Kontaktflächen (5, 6, 7, 8, 24, 25) der geformten Stangen (3, 4, 20) wechselseitig verbindbare Konkavitäten (16, 17, 23) und Einfüge-Ausstülpungen (14, 15, 22) aufweisen, die geeignet sind, die geformten Stangen (3, 4, 20) wechselseitig stabil zu fixieren, wenn sie durch die ringförmigen Elemente (10) umfasst sind.

6. Der Filterkorb (1, 100) gemäß eines jeden der Patentansprüche 1) oder 2), **dadurch gekennzeichnet, dass** das Querschnittprofil jeder der geformten Stangen (3, 4, 20) einen im Wesentlichen trapezförmigen Kopf (11, 26) aufweist, dessen längere Basis (11a, 26a) zum Inneren des Korbs (1, 100) gerichtet ist, sowie einen im Wesentlichen parallelflachen Körper (12, 13, 21) zur wechselseitigen Lagerung.

7. Der Filterkorb (1, 100) gemäß Patentanspruch 6), **dadurch gekennzeichnet, dass** die Breite des Körpers (12, 13, 21) größer ist als die Breite der längeren Basis (11a, 26a) des Kopfes (11, 26), um zwischen den Stangen eine Vielzahl von Schlitzen (19, 27) zu definieren, die geeignet sind, die Filterfläche des Korbs (1, 100) zu bilden.

8. Der Filterkorb (1, 100) gemäß Patentanspruch 6), **dadurch gekennzeichnet, dass** der Körper (13, 21) eine im Wesentlichen zu einer durch die von der geformten Stange (3, 4, 20) definierten Längsachse (Y, Z) verlaufenden Längsebene (α, β) symmetrische Form aufweist.

9. Der Filterkorb (1) gemäß Patentanspruch 8), **dadurch gekennzeichnet, dass** der Kopf bezüglich der Längsebene (α) mittig ist.

10. Der Filterkorb (100) gemäß Patentanspruch 8), **dadurch gekennzeichnet, dass** der Kopf bezüglich der Längsebene (β) außermittig ist.

11. Der Filterkorb (1) gemäß Patentanspruch 6), **dadurch gekennzeichnet, dass** die geformten Stangen (3, 4) eine erste Serie geformter Stangen (3) mit konstantem Querschnitt entlang der durch sie definierten Achse umfassen, sowie eine zweite Serie geformter Stangen (4), die jeweils fehlende Abschnitte (13a) im Körper (13) aufweisen, welche geeignet sind, C-förmige Aussparungen zu definieren, wobei jede Stange (3) der ersten Serie Seite an Seite mit einer zur zweiten Serie gehörende Stange (4) angeordnet ist.

12. Der Filterkorb (1) gemäß Patentanspruch 11), **dadurch gekennzeichnet, dass** die C-förmigen Aussparungen (13a) entlang der Längsachse (Y) der geformten Stangen (4) mit konstantem Abstand angeordnet sind.

13. Der Filterkorb (1) gemäß Patentanspruch 11), **dadurch gekennzeichnet, dass** sich die fehlenden Abschnitte (13a) zwischen zwei nebeneinander liegenden, ringförmigen Elementen (10) befinden.

14. Der Filterkorb (100) gemäß Patentanspruch 6), **dadurch gekennzeichnet, dass** der Körper (21) der geformten Stange (20) an einer der neben ihr liegenden, geformten Stange (20) zugewandten Seitenfläche Aussparungsabschnitte (21 a) aufweist.

15. Der Filterkorb (100) gemäß Patentanspruch 14), **dadurch gekennzeichnet, dass** sich die Aussparungsabschnitte (21a) zwischen zweien der nebeneinander liegenden, ringförmigen Elemente (10) befinden.

16. Der Filterkorb (1, 100) gemäß Patentanspruch 6), **dadurch gekennzeichnet, dass** die Köpfe der geformten Stangen in nicht konstanten, radialen Abständen zur Längsachse der röhrenförmigen Struktur angeordnet sind, wobei die geformten Stangen erste geformte Stangen und zweite geformte Stangen umfassen und die Köpfe der ersten geformten Stangen und der zweiten geformten Stangen in Entsprechung mit den Umfängen koaxial zur Längsachse der röhrenförmigen Struktur angeordnet sind und unterschiedliche Radien aufweisen.

17. Der Filterkorb (1, 100) gemäß Patentanspruch 16), **dadurch gekennzeichnet, dass** alle Köpfe der ersten geformten Stangen in Entsprechung mit einem ersten Umfang angeordnet sind und alle Köpfe der zweiten geformten Stangen in Entsprechung mit einem zweiten Umfang, wobei der erste Umfang einen kleineren Radius aufweist als der Radius des zweiten Umfangs.

18. Der Filterkorb (1, 100) gemäß Patentanspruch 17), **dadurch gekennzeichnet, dass** der besagte Kopf jeder der ersten geformten Stangen mit der Oberfläche zum Inneren des Korbs gerichtet ist, die orthogonal zum ersten Umfangsradius angeordnet ist, und dass der besagte Kopf jeder der zweiten geformten Stangen mit der Oberfläche zum Inneren des Korbs gerichtet ist, die bezüglich des zweiten Umfangsradius geneigt ist.

## Revendications

1. Une méthode pour la production de paniers de filtrage (1, 100) pour machines de filtrage de fibres en suspension aqueuse, **caractérisée en ce qu'**elle comprend les phases suivantes:
- préparation d'une pluralité de barres façonnées à développement essentiellement longitudinal (3, 4, 20);
- disposition desdites barres façonnées (3, 4, 20) l'une à côté de l'autre et l'une près de l'autre, au moins certaines desdites barres façonnées (3, 4, 20) ayant les surfaces de contact (5, 6, 7, 8, 24, 25) réalisées de manière à ce que des fentes de filtrage (19) sont formées entre lesdites barres façonnées, lesdites surfaces de contact desdites barres façonnées appartenant à des plans mutuellement convergeants pour définir une structure tubulaire (9) ayant un axe longitudinal central (X);
- encerclement extérieur desdites barres façonnées (3, 4, 20) au moyen de deux ou plusieurs éléments annulaires (10) en mesure de réaliser une interférence radiale pour contraindre mutuellement et stablement lesdites barres façonnées.

2. La méthode selon la revendication 1) **caractérisée en ce que** lesdites barres façonnées (3, 4, 20) forment des directions longitudinales, parallèles l'une à l'autre et par rapport audit axe longitudinal central (X).

3. Un panier de filtrage (1, 100) pour machines de filtrage de fibres en suspension aqueuse, **caractérisé en ce qu'**il comprend:
- une pluralité de barres façonnées (3, 4, 20) à développement essentiellement longitudinal disposées l'une à côté de l'autre et l'une près de l'autre, au moins certaines desdites barres façonnées (3, 4, 20) ayant les surfaces de contact (5, 6, 7, 8, 24, 25) réalisées de manière à ce que des fentes de filtrage (19) sont formées entre lesdites barres façonnées, lesdites surfaces de contact desdites barres façonnées appartenant à des plans mutuellement convergeants pour définir une structure tubulaire (9) ayant un axe longitudinal central (X);
- deux ou plusieurs éléments annulaires mutuellement coaxiaux (10), espacés mutuellement selon ledit axe longitudinal (X), reliés extérieurement auxdites barres façonnées (3, 4, 20) avec interférence radiale pour prévoir l'encerclement desdites barres façonnées (3, 4, 20).

4. Le panier de filtrage (1, 100) selon la revendication 3) **caractérisé en ce que** lesdits plans mutuellement convergeants, auxquels lesdites surfaces de contact (5, 6, 7, 8, 24, 25) appartiennent, convergent dans ledit axe longitudinal central (X).

5. Le panier de filtrage (1, 100) selon l'une quelconque des revendications 3) ou 4) **caractérisé en ce que** lesdites surfaces de contact (5, 6, 7, 8, 24, 25) desdites barres façonnées (3, 4, 20) comprennent des concavités mutuellement assemblables (16, 17, 23) et des protubérances d'insertion (14, 15, 22) en mesure de contraindre mutuellement et stablement lesdites barres façonnées (3, 4, 20) quand elles sont encerclées au moyen desdits éléments annulaires (10).

6. Le panier de filtrage (1, 100) selon l'une quelconque des revendications 1) ou 2) **caractérisé en ce que** le profil transversal de chacune desdites barres façonnées (3, 4, 20) comprend une tête (11, 26) de forme essentiellement trapézoïdale ayant la base plus longue (11a, 26a) tournée vers la partie interne dudit panier (1, 100) et un corps (12, 13, 21) de forme essentiellement parallélépipédique de soutien réciproque.

7. Le panier de filtrage (1, 100) selon la revendication 6) **caractérisé en ce que** la largeur dudit corps (12, 13, 21) est plus grande que la largeur de ladite base plus longue (11a, 26a) de ladite tête (11, 26) pour définir une pluralité de fentes (19, 27) entre lesdites barres aptes à réaliser la surface de filtrage dudit panier (1, 100).

8. Le panier de filtrage (1, 100) selon la revendication 6) **caractérisé en ce que** ledit corps (13, 21) a une forme essentiellement symétrique par rapport à un plan longitudinal (α, β) qui passe à travers l'axe longitudinal (Y, Z) défini par ladite barre façonnée (3, 4, 20).

9. Le panier de filtrage (1) selon la revendication 8) **caractérisé en ce que** ladite tête est centrée par rapport audit plan longitudinal (α).

10. Le panier de filtrage (100) selon la revendication 8) **caractérisé en ce que** ladite tête est excentrique par rapport audit plan longitudinal (β).

11. Le panier de filtrage (1) selon la revendication 6) **caractérisé en ce que** lesdites barres façonnées (3, 4) comprennent une première série de barres façonnées (3) avec section constante le long de l'axe longitudinal qu'elles définissent, et une deuxième série de barres façonnées (4), chacune ayant des parties manquantes (13a) dans le corps (13) aptes à définir des cavités en forme de C, chaque barre (3) de ladite première série étant disposée à côté d'une barre (4) appartenant à ladite deuxième série.

12. Le panier de filtrage (1) selon la revendication 11) **caractérisé en ce que** lesdites cavités en forme de C (13a) sont disposées le long de l'axe longitudinal (Y) desdites barres façonnées (4), avec pas constant.

13. Le panier de filtrage (1) selon la revendication 11) **caractérisé en ce que** lesdites parties manquantes (13a) sont comprises entre deux desdits éléments annulaires adjacents (10).

14. Le panier de filtrage (100) selon la revendication 6) **caractérisé en ce que** ledit corps (21) de ladite barre façonnée (20) présente des parties rentrantes (21 a) à hauteur d'une surface latérale tournée vers la barre façonnée adjacente (20).

15. Le panier de filtrage (100) selon la revendication 14) **caractérisé en ce que** lesdites parties rentrantes (21 a) sont comprises entre deux desdites éléments annulaires adjacents (10).

16. Le panier de filtrage (1, 100) selon la revendication 6) **caractérisé en ce que** lesdites têtes desdites barres façonnées sont disposées à des distances radiales non constantes par rapport audit axe longitudinal de ladite structure tubulaire, lesdites barres façonnées comprennent de premières barres façonnées et de deuxièmes barres façonnées où les têtes desdites premières barres façonnées et desdites deuxièmes barres façonnées sont disposées selon des circonférences coaxiales avec l'axe longitudinal de ladite structure tubulaire et ont des rayons différents.

17. Le panier de filtrage (1, 100) selon la revendication 16) **caractérisé en ce que** lesdites têtes desdites premières barres façonnées sont toutes disposées selon une première circonférence et lesdites têtes desdites deuxièmes barres façonnées sont toutes disposées selon une deuxième circonférence, ladite première circonférence ayant un rayon plus petit par rapport au rayon de ladite deuxième circonférence.

18. Le panier de filtrage (1, 100) selon la revendication 17) **caractérisé en ce que** ladite tête de chacune desdites premières barres façonnées a la surface tournée vers la partie interne dudit panier qui est disposée de manière orthogonale par rapport au rayon de la première circonférence, et ladite tête de chacune desdites deuxièmes barres façonnées a la surface tournée vers la partie interne dudit panier qui est inclinée par rapport au rayon de ladite deuxième circonférence.
